# EUROPEAN PATENT SPECIFICATION

(11) **EP 0 596 265 B1**
(45) Date of publication and mention of the grant of the patent: **06.08.1997**
(21) Application number: 93116047.7
(22) Date of filing: 05.10.1993
(51) Int. Cl.: G02C 5/22

(54) **Elastic hinge for spectacles**
Federscharnier für Brillen
Charnière élastique pour lunettes

(30) Priority: 14.10.1992 IT PD920182
(43) Date of publication of application: 11.05.1994
(73) Proprietor: VISOTTICA S.p.A., I-31058 Susegana (Province of Treviso) (IT)
(72) Inventor: Montalban, Rinaldo, I-Venezia (IT)
(74) Representative: Modiano, Guido, Dr.-Ing.

(56) References cited:
- EP-A- 0 207 190
- EP-A- 0 426 947
- FR-A- 2 542 099
- FR-A- 2 664 990

## Description

The present invention relates to an elastic hinge for spectacles.

Various types of elastic hinge for spectacles are already known; one is substantially constituted by an elongated body containing a cylindrical helical spring which is arranged between the head of a pin passing through the spring axially and stopper means locked within said body.

The pin passes through the abutment element and engages a first hinge element, to which a second hinge element is pivotally joined; said second hinge element is fixed to the front of the spectacles and has a polygonal profile, one side whereof rests on a flat end of the body.

Hinges made according to this construction method differ from one another in the type of locking produced between the stopper means and the body in which they are inserted.

Locking generally occurs by means of an elastic ring, for example a snap-ring, suitable to be accommodated in an appropriate cavity of the internal surface of the body by virtue of its own elastic expansion or by being pushed by an annular frustum-shaped element arranged between the ring itself and the spring.

In other cases, locking occurs by means of the expansion of wings extending from the stopper means under the action of the cylindrical helical spring.

Although these hinges are appreciated due to their constructive simplicity and easy assembly -- the elements of said hinges are in fact first pre-assembled outside the body and then inserted therein and subsequently locked -- they however have some drawbacks, the most important of which is due to the fact that in order to insert the preassembled elements into the body it is necessary to use a tool suitable to compress the elastic ring or the wings until they are inserted.

This sometimes entails difficulties and wastes of time. Known from FR-A-2 664 990 is an elastic hinge for spectacles, the hinge having a rod which has at one end an elongated hollow body which has a seat therein, elastic means contained within said body, an abutment element having a cylindrical median portion lockable in the body by engagement with the seat , a pin which has a head and which transverses axially the elastic means, passes through the abutment element and engages a first hinge element, and a second hinge element pivoted to the first hinge element and fixed to a front part of the spectacles, the abutment element having portions which are elastically expandable and which have elements engageable with the seat upon compression of the elastic means by the pin, the abutment element having two semi-cylindrical sectors extending from the median portion and a diametrical slot extending between the semi-cylindrical sectors, each of the sectors having an end and a raised portion providing the elements for engagement with the seat, the abutment element being elastically deformable in the region which connects the semi-cylindrical sectors to the median portion.

The aim of the present invention is to provide an elastic hinge for spectacles which eliminates the drawbacks described above in known types.

A consequent primary object is to provide an elastic hinge which can be assembled easily and rapidly.

Another object is to provide a hinge which can be manufactured at low cost with conventional equipment and systems.

This aim, these objects and others which will become apparent hereinafter are achieved by an elastic hinge for spectacles as defined in claim 1.

Further characteristics and advantages of the present invention will become apparent from the following detailed description of a preferred embodiment thereof, illustrated only by way of non-limitative example in the accompanying drawings, wherein:

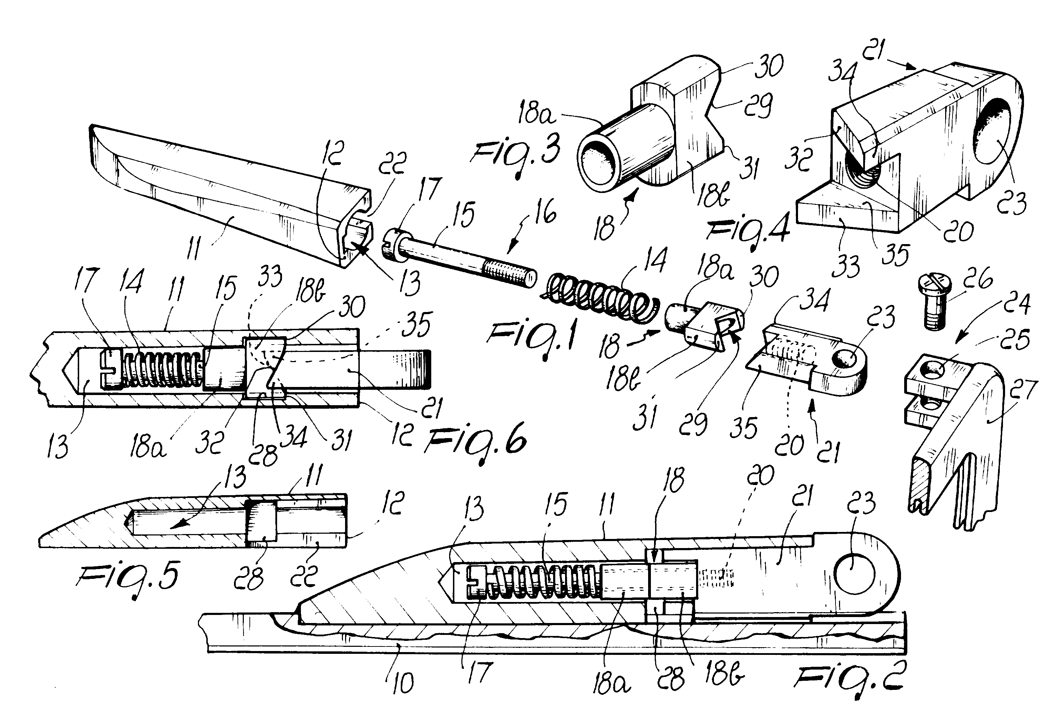

figure 1 is an exploded perspective view of the elastic hinge;
figure 2 is a view of the hinge, assembled inside the accommodation body, shown in cross-section;
figure 3 is an enlarged-scale perspective view of the contrast element locking the hinge in the body;
figure 4 is an enlarged-scale perspective view of the first hinge element;
figure 5 is a longitudinal sectional view of the body;
figure 6 is a view of the assembled hinge, taken at right angles with respect to figure 2.

With reference to the above figures, an elastic hinge for spectacles comprises an elongated body 11 which is fixed to the end of a temple 10; said body 11 has a flat end face 12 onto which a blind cylindrical hole 13 opens, said hole 13 passing longitudinally through the body.

A cylindrical helical spring 14 is accommodated in said cylindrical hole 13 and winds around the stem 15 of a screw 16 on the head 17 of which it abuts with its end.

The screw 16 rests, with its other end, on a stopper means, also referred to as "contrast element", 18 which is locked within the body 11 and which will be described in greater detail hereinafter.

The stem 15 of the screw 16 passes through the contrast element 18 in an axial hole 19 thereof, and its threaded end engages a complementarily threaded hole of a first hinge element 21.

The first hinge element 21 has a polygonal cross-section, is in practice shaped substantially like a parallelepiped, and fits between the walls of a diametrical slot 22 formed in the body 11 from the end where the hole 13 opens.

Said first hinge element 21 protrudes from the body 11 and has a hole 23 for pivoting with a second hinge element 24 which is substantially fork-shaped and has pivoting holes 25 for a screw pin 26.

The second hinge element 24 is fixed to the front 27 of a pair of spectacles.

The external profile of the fork of said second hinge element 24 has a substantially rectangular shape comprising at least two sides, one of which rests on the end face 12 of the body 11.

The sides define stable equilibrium positions for the rotation of the temple 10, which occurs so that the spring 14 is compressed due to the traction applied by the first hinge element 21 and thus by the screw 16.

As regards the contrast element 18, it comprises a cylindrical portion 18a having a diameter substantially equal to that of the hole 13 and being aligned with a portion 18b which is substantially shaped like a parallelepiped and extends diametrically, thus defining two diametrically opposite tabs which protrude from the portion 18a and are accommodated in a corresponding cavity 28 formed in the body 11.

The width or thickness of said portion 18b is substantially equal to the width or thickness of the first hinge element 21.

Frontally, on the side opposite to the portion 18a, the portion 18b has a notch 29 shaped like a right-angled V with its vertex arranged at the axis.

The notch 29 however leaves two flat end regions, respectively 30 and 31, on the surface from which it extends.

The contrast element 18 is inserted in the body 11, arranging the portion 18b so that it fits inside the diametrical slot 22, which ends exactly at the cavity 28.

The diameter of the cavity 28 is larger than the transverse width of the slot 22.

In this insertion arrangement, the flat regions 30 and 31 of the portion 18b of the element 18 rest frontally on respective inclined planes 32 and 33 formed by corresponding tabs 34 and 35 extending axially from said first hinge element 21 in an axially offset position, one opposite to the other.

The radial distance between the tabs 34 and 35 is such that it can contain the portion 18b of the element 18 which is arranged at right angles to the first hinge element 21.

The spring 14 is already in a pre-compressed condition when the portion 18b of the element 18 is at right angles to the first hinge element 21 between the tabs 34 and 35.

Thus, in order to arrange said spring 14 so that it is aligned and co-planar to achieve insertion in the body 11, it is necessary to further compress the spring 14, making the flat regions 30 and 31 slide on the respective inclined planes 32 and 33, which are conveniently arranged so that at the end of the insertion, as soon as the portion 18b is inside the cavity 28, said planes, under the action of the spring 14, rotate the contrast element 18 with the portion 18b at right angles to the first hinge element 21 in an angular region of the cavity which is different from the region for connection to said slot 22.

Locking of the contrast element 18 in the body 11 is thus achieved.

At this point it should be stressed that when the hinge opens and the first element 21 consequently partially exits from the body 11, said element 21 tends to disengage from contact with the contrast element 18 which, being pushed by the spring 14, abuts inside the cavity 28 against the flat regions 30 and 31.

As regards the assembly of the hinge, the screw 16 is inserted in the spring 14 and in the contrast element 18 and then screwed in the hole 20 of the first hinge element 21 until the spring 14 is pre-compressed, after arranging the portion 18b of the element 18 at right angles to the first hinge element 21.

The contrast element 18 is then rotated by sliding, in contrast with the action of the spring 14, the flat regions 30 and 31 along the inclined planes 32 and 33 in order to align said contrast element with the hinge element 21 and insert it in the diametrical slot 22.

Insertion is thus subsequently performed until the portion 18b of the contrast element 18 accommodates in the cavity 28.

From what has been described above, it is evident that the hinge elements are pre-assembled externally and are then inserted in the body 11 without any tool.

It is simply sufficient to guide, in the correct alignment, the portion 18b of the contrast element 18 and the first hinge element 21 in the slot 22.

In practice it has been observed that the intended aim and objects of the present invention have been achieved.

The invention thus conceived is susceptible to numerous modifications and variations, all of which are within the scope of the invention as defined in the claims.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Elastic spectacle hinge comprising an elongated body (11) arranged to be mounted on the end portion of a temple, said body (11) comprising an end face (12) and a cylindrical bore (13) extending from said end face (12) into the body (11), said bore (13) comprising a cavity (28) located between a front portion and an end portion of bore (13) and enlarged with respect to the diameter of the bore (13), said bore (13) housing a pin (15) extending through an elastic means (14), through a stopper means (18) locked in said cavity (28), and into a first hinge element (21) arranged to be pivotally joined to a second hinge element (24) fixed to the front portion (27) of a spectacle frame, said elastic means abutting against a head (17) of said pin (15) and against said stopper means (18), said elastic means (14) being located in said end portion of said bore (13) and said first hinge element (21) being located in said front portion of said bore (13) proximate to said end face (12), characterized in that said stopper means (18) has at least one radial protrusion (18b) for locking said stopper means (18) in said cavity (28), in that a slot (22) in the wall of the body (11) extends form said end face (12) to said cavity (28) such as to allow the insertion of the stopper means (18) by enabling said protrusion (18b) to be guided in said slot (22), in that said first hinge element (21) has on its front end facing said stopper means (18) at least one tab (34, 35) formed axially offset with an inclined surface (32, 33), said inclined surface (32, 33) and said protrusion (18b) being arranged to cooperate during insertion of said pin (15), said elastic means (14), said stopper means (18), and said first hinge element (21) into said bore (13) such that said stopper means (18) is urged to rotate by axial force exerted by said first hinge (21) means when said stopper means (18) arrives at said cavity (28) thus being locked therein.

2. Hinge according to claim 1, characterized in that said stopper means (18) has two radial protrusions (18b), in diametrically opposite positions arranged for insertion in to said slot (22).

3. Hinge according to claim 2, characterized in that each one of said protrusions (18b) rests frontally, in the position for insertion in said slot (22), on a respective inclined surface (32,33) formed on said first hinge element (21) in an axially offset position.

4. Hinge according to claims 2 or 3, characterized in that said stopper means (18) comprises a cylindrical portion (18a), the diameter of which is substantially equal to that of the hole (13) of said body (11), and a portion (18b) shaped substantially like a parallelepiped, extending diametrically and forming said two diametrically opposite protrusions (18b), said protrusions protruding from said cylindrical portion (18a) and being suitable for accommodation in said cavity (28).

5. Hinge according to one or more of the preceding claims, characterized in that the diameter of said cavity (28) is at least equal to the transverse width of said slot (22) for guiding said first hinge element (21) for the insertion of said stopper means (18).

6. Hinge according to claim 4 and one or more of the other preceding claims, characterized in that the width or thickness of said parallelepiped portion (18b) of said stopper means (18) is substantially equal to the width or thickness of said first hinge element (21).

7. Hinge according to claim 4 and one or more of the other preceding claims, characterized in that said parallelepiped portion (18b) is frontally provided, on the side opposite to said cylindrical portion (18a), with a notch (29) which leaves two flat end regions (30,31) on the surface from which it extends.

8. Hinge according to claim 7, characterized in that said flat regions (30,31) of the parallelepiped portion (18b) of said stopper means (18), in the position for insertion in said body (11), rest frontally on said inclined surfaces (32,33) of said first hinge element (21).

9. Hinge according to one or more of the preceding claims, characterized in that said inclined surfaces (32,33) are formed on corresponding tabs (34,35) extending axially from said first hinge element (21) in an axially offset position, one opposite to the other.

10. Hinge according to claim 9, characterized in that the radial distance between said tabs (34,35) of said first hinge element (21) is such that it can receive said parallelepiped portion (18b) of said stopper means (18) arranged at right angles to said first hinge element (21).

11. Hinge according to one or more of the preceding claims, characterized in that said inclined surfaces (32,33) of said first hinge element (21) are flat surfaces inclined in opposite directions.

## Patentansprüche

1. Elastisches Brillenscharnier umfassend einen länglichen Körper (11), so angeordnet, daß er am Endteil eines Brillenbügels anzubringen ist, wobei der Körper (11) eine Endfläche (12) und eine zylindrische Bohrung (13) umfaßt, die sich von der Endfläche (12) in den Körper (11) erstreckt, wobei die Bohrung (13) eine Ausnehmung (28) umfaßt, die zwischen einem Vorderteil und einem Endteil der Bohrung (13) gelegen ist und in Bezug auf den Durchmesser der Bohrung (13) vergrößert ist, wobei die Bohrung (13) einen Stift (15) aufnimmt, der sich durch ein elastisches Mittel (14), durch ein in der Ausnehmung (28) befestigtes Stoppermittel (18) und in ein erstes Scharnierelement (21) erstreckt, das so angeordnet ist, daß es drehbar mit einem am Vorderteil (27) eines Brillengestells befestigten zweiten Scharnierelement (24) verbunden ist, wobei das elastische Mittel gegen einen Kopf (17) des Stifts (15) anschlägt und gegen das Stoppermittel (18), wobei das elastische Mittel (14) im Endteil der Bohrung (13) angeordnet ist und das erste Scharnierelement (21) im Vorderteil der Bohrung (13) nahe der Endfläche (12) angeordnet ist, dadurch gekennzeichnet, daß das Stoppermittel (18) mindestens einen radialen Vorsprung (18b) zum Befestigen des Stoppermittels (18) in der Ausnehmung (28) aufweist, in dem ein Schlitz (22) in der Wand des Körpers (11) sich von der Endfläche (12) zu der Ausnehmung (28) erstreckt, so daß er das Einsetzen des stoppermittels (18) ermöglicht, indem es möglich ist, daß der Vorsprung (18b) in den Schlitz (22) geführt wird, dadurch daß das erste Scharnierelement (21) auf seinem dem Stopermittel (18) zugewandten Vorderende mindestens einen Ansatz (34, 35) aufweist, der axial versetzt mit einer geneigten Oberfläche (32, 33) ausgebildet ist, wobei die geneigte Oberfläche (32, 33) und der Vorsprung (18b) so angeordnet sind, daß sie beim Einsetzen des Stifts (15), des elastischen Mittels (14), des Stoppermittels (18) und des ersten Scharnierelements (21) in die Bohrung (13) kooperieren, in der Weise, daß das Stoppermittel (19) gezwungen ist, durch vom ersten Scharniermittel (21) ausgeübte axiale Kraft sich zu drehen, daß, wenn das Stoppermittel (18) bei der Ausnehmung (28) ankommt, es darin befestigt wird.

2. Scharnier nach Anspruch 1, dadurch gekennzeichnet, daß das Stoppermittel (18) zum Einsetzen in den Schlitz (22) zwei radiale Vorsprünge (18b) in diametral gegenüberliegenden Positionen angeordnet aufweist.

3. Scharnier nach Anspruch 2, dadurch gekennzeichnet, daß jeder der Vorsprünge (18b) frontal, in der Position zum Einsetzen in den Schlitz (22), auf einer entsprechenden geneigten Oberfläche (32, 33) ruht, die auf dem ersten Scharnierelement (21) in einer axial versetzten Position ausgebildet ist.

4. Scharnier nach Anspruch 2 oder 3, dadurch gekennzeichnet, daß das Stoppermittel (18) einen zylindrischen Teil (18a) umfaßt, dessen Durchmesser im wesentlichen gleich dem des Loches (13) des Körpers (11) ist, und einen Teil (18b), der im wesentlichen wie ein Parallelepiped geformt ist, das sich diametral erstreckt und die beiden diametral gegenüberliegenden Vorsprünge (18b) bildet, wobei die Vorsprünge vom zylindrischen Teil (18a) hervorstehen und zur Aufnahme in der Ausnehmung (28) geeignet sind.

5. Scharnier nach einem oder mehreren der vorhergehenden Ansprüche, dadurch gekennzeichnet, daß der Durchmesser der Ausnehmung (28) mindestens gleich der Querbreite des Schlitzes (22) zum Führen des ersten Scharnierelements (21) zum Einsetzen des Stoppermittels (18) ist.

6. Scharnier nach Anspruch 4 und einem oder mehreren der anderen vorhergehenden Ansprüche, dadurch gekennzeichnet, daß die Breite oder Dicke des Parallelepipedteils (18b) des Stoppermittels (18) im wesentlichen gleich der Breite oder Dicke des ersten Scharnierelements (21) ist.

7. Scharnier nach Anspruch 4 und einem oder mehreren der anderen vorhergehenden Ansprüche, dadurch gekennzeichnet, daß der Parallelepipedteil (18b) vorne, auf der Seite gegenüber dem zylindrischen Teil (18a), mit einer Kerbe (29) versehen ist, die auf der Oberfläche, von der sie sich erstreckt, zwei flache Endbereiche (30, 31) hinterläßt.

8. Scharnier nach Anspruch 7, dadurch gekennzeichnet, daß die flachen Bereiche (30, 31) des Parallelepipedteils (18b) des Stoppermittels (18), in der Position zum Einsetzen in den Körper (11), vorne auf den geneigten Oberflächen (32, 33) des ersten Scharnierelements (21) ruhen.

9. Scharnier nach einem oder mehreren der vorhergehenden Ansprüche, dadurch gekennzeichnet, daß die geneigten Oberflächen (32, 33) auf entsprechenden Ansätzen (34, 35) ausgebildet sind, die sich axial vom ersten Scharnierelement (21) in einer axial versetzten Position erstrecken, wobei sie einander gegenüberstehen.

10. Scharnier nach Anspruch 9, dadurch gekennzeichnet, daß der radiale Abstand zwischen den Ansätzen (34, 35) des ersten Scharnierelements (21) derart ist, daß er den Parallelepipedteil (18b) des Stoppermittels (18) aufnehmen kann, das im rechten Winkel zum ersten Scharnierelement (21) angeordnet ist.

11. Scharnier nach einem oder mehreren der vorhergehenden Ansprüche, dadurch gekennzeichnet, daß die geneigten Oberflächen (32, 33) des ersten Scharnierelements (21) flache Oberflächen sind, die in gegenüberliegende Positionen geneigt sind.

## Revendications

1. Charnière élastique de lunettes, comprenant un corps allongé (11) agencé pour être monté sur la partie d'extrémité d'une branche, ledit corps (11) comprenant une face d'extrémité (12) et un trou cylindrique (13) s'étendant depuis ladite face d'extrémité (12) dans le corps (11), ledit trou (13) comprenant une cavité (28) disposée entre une portion frontale et une portion d'extrémité du trou (13) et élargie par rapport au diamètre du trou (13), ledit trou (13) logeant une tige (15) s'étendant à travers un moyen élastique (14), à travers un moyen d'arrêt (18) verrouillé dans ladite cavité (28) et dans un premier élément de charnière (21) agencé pour être relié à pivotement à un second élément de charnière (24) fixé à la portion frontale (27) d'une monture de lunettes, ledit moyen élastique étant en butée contre une tête (17) de ladite tige (15) et contre ledit moyen d'arrêt (18), ledit moyen élastique (14) étant disposé dans ladite portion d'extrémité dudit trou (13) et ledit premier élément de charnière (21) étant disposé dans ladite portion frontale dudit trou (13) à proximité de ladite face d'extrémité (12), caractérisée en ce que ledit moyen d'arrêt (18) possède au moins une saillie radiale (18b) pour verrouiller ledit moyen d'arrêt (18) dans ladite cavité (28), en ce qu'une fente (22) dans la paroi du corps (11) s'étend depuis ladite face d'extrémité (12) vers ladite cavité (28) de manière à permettre l'insertion du moyen d'arrêt (18) en permettant à ladite saillie (18b) d'être guidée dans ladite fente (22), en ce que ledit premier élément de charnière (21) possède sur son extrémité frontale en regard dudit moyen d'arrêt (18) au moins une patte (34,35) décalée axialement et comportant une surface inclinée (32,33), ladite surface inclinée (32,33) et ladite saillie (18b) étant agencées pour coopérer pendant l'insertion de ladite tige (15), dudit moyen élastique (14), dudit moyen d'arrêt (18), et dudit premier élément de charnière (21) dans ledit trou (13) de telle sorte que ledit moyen d'arrêt (18) est amené à tourner par une force axiale exercée par ledit premier élément de charnière (21) lorsque ledit moyen d'arrêt (18) arrive à ladite cavité (28) en étant ainsi verrouillé à l'intérieur.

2. Charnière selon la revendication 1, caractérisée en ce que ledit moyen d'arrêt (18) possède deux saillies radiales (18b) dans des positions diamétralement opposées, agencées pour une insertion dans ladite fente (22).

3. Charnière selon la revendication 2, caractérisée en ce que chacune desdites saillies (18b) repose frontalement, dans la position pour l'insertion dans ladite fente (22), sur une surface inclinée respective (32,33) formée sur ledit premier élément de charnière (21) dans une position décalée axialement.

4. Charnière selon les revendications 2 ou 3, caractérisée en ce que ledit moyen d'arrêt (18) comprend une portion cylindrique (18a) dont le diamètre est sensiblement égal à celui du trou (13) dudit corps (11) et une portion (18b), sensiblement en forme de parallélépipède, s'étendant diamétralement et formant lesdites deux saillies (18b) diamétralement opposées, lesdites saillies faisant saillie de ladite portion cylindrique (18a) et étant aptes à être reçues dans ladite cavité (28).

5. Charnière selon une ou plusieurs des revendications précédentes, caractérisée en ce que le diamètre de ladite cavité (28) est au moins égal à la largeur transversale de ladite fente (22) pour guider ledit premier élément de charnière (21) pour l'insertion dudit moyen d'arrêt (18).

6. Charnière selon la revendication 4 et une ou plusieurs des autres revendications précédentes, caractérisée en ce que la largeur ou l'épaisseur de ladite portion parallélépipédique (18b) dudit moyen d'arrêt (18) est sensiblement égale à la largeur ou à l'épaisseur dudit premier élément de charnière (21).

7. Charnière selon la revendication 4 et une ou plusieurs des autres revendications précédentes, caractérisée en ce que ladite portion parallélépipédique (18b) est munie frontalement, sur le côté opposé à ladite portion cylindrique (18a), d'une encoche (29) qui délimite deux régions d'extrémité planes (30,31) sur la surface depuis laquelle elle s'étend.

8. Charnière selon la revendication 7, caractérisée en ce que lesdites régions planes (30,31) de la portion parallélépipédique (18b) dudit moyen d'arrêt (18), dans la position pour l'insertion dans ledit corps (11), reposent frontalement sur lesdites surfaces inclinées (32,33) dudit premier élément de charnière (21).

9. Charnière selon une ou plusieurs des revendications précédentes, caractérisée en ce que lesdites surfaces inclinées (32,33) sont formées sur des pattes correspondantes (34,35) s'étendant axialement depuis ledit premier élément de charnière (21) dans une position décalée axialement en étant opposées l'une à l'autre.

10. Charnière selon la revendication 9, caractérisée en ce que la distance radiale entre lesdites pattes (34,35) dudit premier élément de charnière (21) est telle qu'elle peut recevoir ladite portion parallélépipédique (18b) dudit moyen d'arrêt (18) disposée perpendiculairement audit premier élément de charnière (21).

11. Charnière selon une ou plusieurs des revendications précédentes, caractérisée en ce que lesdites surfaces inclinées (32,33) dudit premier élément de charnière (21) sont des surfaces planes inclinées dans des directions opposées.
